# DEMANDE DE BREVET EUROPEEN

(11) **EP 1 040 958 A1**
(43) Date de publication de la demande: **04.10.2000**
(21) Numéro de dépôt: 00400785.2
(22) Date de dépôt: 22.03.2000
(51) Int. Cl.: B60N 2/02, B60N 2/015

(54) **Siège escamotable par repli pour passager de véhicule**

(30) Priorité: 02.04.1999 FR 9904167
(71) Demandeur: Matra Automobile, 75016 Paris (FR)
(72) Inventeur: Ferrarese, Mario, 78580 Maule (FR); Bissey, Sandrine N.A., 95610 Eragny sur Oise (FR)
(74) Mandataire: David, Alain

(57) **Abrégé**

Dans un véhicule qui comporte un habitacle délimité à l'avant par un pare-brise et en dessous par un plancher (38) et comprenant une planche de bord (18) disposée en dessous de ce pare-brise, il est prévu un siège comportant une assise (22a) et un dossier (22b) qui peut être rabattu sur cette assise, l'assise comportant un socle (26) muni d'une part de pieds avant (28a) et arrière (30a) comportant chacun des verrous d'accrochage désarmables pour fixer sélectivement le siège au plancher du véhicule (38) et d'autre part de moyens (36a, 36b) de fixation du siège dans une position longitudinale déterminée. Selon l'invention, le siège peut être déplacé entre une position normale d'utilisation dans laquelle un utilisateur peut prendre place sur le siège dont le dossier est alors relevé et une position terminale de rangement dans laquelle le dossier est rabattu sur son assise et le siège est entièrement poussé dans une cavité (56) réalisée sous la planche de bord. Le siège comporte des roulettes rétractables avant (42a) et arrière (44a) dont au moins deux roulettes collatérales sont destinées à rouler le long d'un profil de guidage longitudinal (46) fixé au plancher du véhicule et s'étendant jusqu'au tablier avant du véhicule (58).

## Description

### Domaine de l'invention

La présente invention se rapporte au domaine général des transports de passagers tant individuels que collectifs au moyen de véhicules terrestres à moteurs (automobiles ou ferroviaires), d'engins aériens ou maritimes, et elle concerne plus particulièrement les sièges avant passager de ces véhicules.

### Art antérieur

Dans la plupart des véhicules, notamment les véhicules automobiles, l'habitacle est délimité à l'avant par le poste de conduite comportant notamment la planche de bord et le tablier disposé sous cette planche de bord. En arrière de ce poste de conduite sont disposés côte à côte en général le siège conducteur et au moins un siège avant passager.

Lorsque l'on souhaite charger dans le véhicule des objets encombrants et notamment de grande longueur, la présence du siège passager peut alors constituer une gène importante. Dans ce cas, il est connu de procéder directement à l'enlèvement du siège qui, à cet effet, est fixé au plancher du véhicule de façon amovible.

Cette solution présente toutefois certains inconvénients. En effet, outre que cet enlèvement ne peut guère avoir lieu de façon inopinée, par exemple au cours d'un déplacement, car se pose alors le problème de l'entreposage temporaire du siège ôté, il convient de noter qu'un tel siège présente un poids relativement important et que sa dépose et son portage hors du véhicule est difficilement réalisable par une seule personne.

### Objet et définition de l'invention

La présente invention propose donc un siège avant passager qui pallie ces inconvénients et notamment permet des chargements d'objets encombrants sans la nécessité de sa dépose puis de son portage vers un lieu d'entreposage (un garage par exemple).

Dans ce but, l'invention propose un siège passager d'un véhicule qui comporte un habitacle délimité à l'avant par un pare-brise et en dessous par un plancher et comprenant une planche de bord disposée en dessous de ce pare-brise, le siège comportant une assise et un dossier qui peut être rabattu sur cette assise, l'assise comportant un socle muni d'une part de pieds avant et arrière comportant chacun des verrous d'accrochage désarmables pour fixer sélectivement le siège au plancher du véhicule et d'autre part de moyens de fixation du siège dans une position longitudinale déterminée, caractérisé par le fait qu'il peut être déplacé entre une position normale d'utilisation dans laquelle un utilisateur peut prendre place sur le siège dont le dossier est alors relevé et une position terminale de rangement dans laquelle le dossier est rabattu sur son assise et le siège est entièrement poussé dans une cavité réalisée sous la planche de bord.

Ainsi, par cette configuration, il est possible de dégager complètement l'habitacle du coté passager et d'autoriser alors un très grand volume de chargement lorsque le conducteur se trouve seul dans son véhicule.

Selon le mode de réalisation envisagé, le siège passager de véhicule, dans sa position terminale de rangement, peut être soit verrouillé sur des anneaux fixés dans des ouvertures associées pratiquées dans le plancher de la cavité, soit verrouillé sur des anneaux montés dans deux coulisseaux qui peuvent se déplacer longitudinalement dans deux rails parallèles fixés au plancher du véhicule et s'étendant jusqu'au tablier avant du véhicule.

Dans un mode préférentiel de réalisation, le socle porte en outre des roulettes rétractables avant et arrière dont au moins deux roulettes collatérales sont destinées à rouler le long d'un profil de guidage longitudinal. Le profil de guidage longitudinal s'étend jusqu'au tablier avant du véhicule et les roulettes rétractables sont montées aux premières extrémités de leviers dont les secondes extrémités sont solidaires deux à deux de ressorts de rappel exerçant une force tendant à relever les roulettes en rapprochant les secondes extrémités des leviers et la libération des ressorts de rappel est commandée à partir du levier de manoeuvre manuel du déverrouillage des verrous d'accrochage du siège au plancher lors du déverrouillage sélectif de ces verrous.

Avantageusement, le siège selon l'invention peut comporter en outre des glissières de réglage disposées entre le socle et l'assise pour permettre un réglage longitudinal du siège.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique en perspective de la partie avant de l'habitacle d'un véhicule automobile,
- la figure 2 montre un premier exemple de réalisation d'un siège avant passager selon l'invention dans une position normale d'utilisation dans l'habitacle de la figure 1,
- la figure 3 est une vue de face du siège avant passager de la figure 2,
- les figures 4 et 5 illustrent le siège avant passager de la figure 2 dans une position de déplacement intermédiaire et dans une position de rangement terminale sous la planche de bord,
- la figure 6 montre un second exemple de réalisation d'un siège avant passager selon l'invention dans une position normale d'utilisation dans l'habitacle de la figure 1,
- la figure 7 est une vue de face du siège avant passager de la figure 6, et

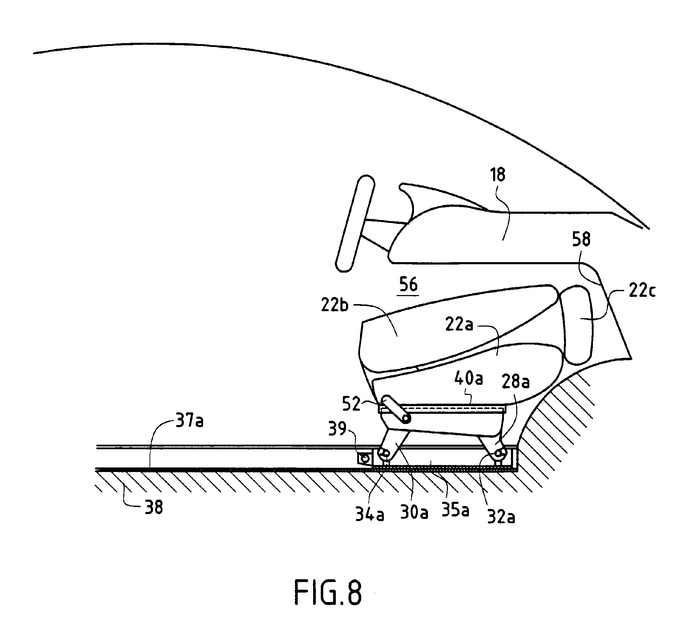

- la figure 8 illustre le siège avant passager de la figure 2 dans une position de rangement terminale sous la planche de bord,

### Description détaillée d'un mode de réalisation préférentiel

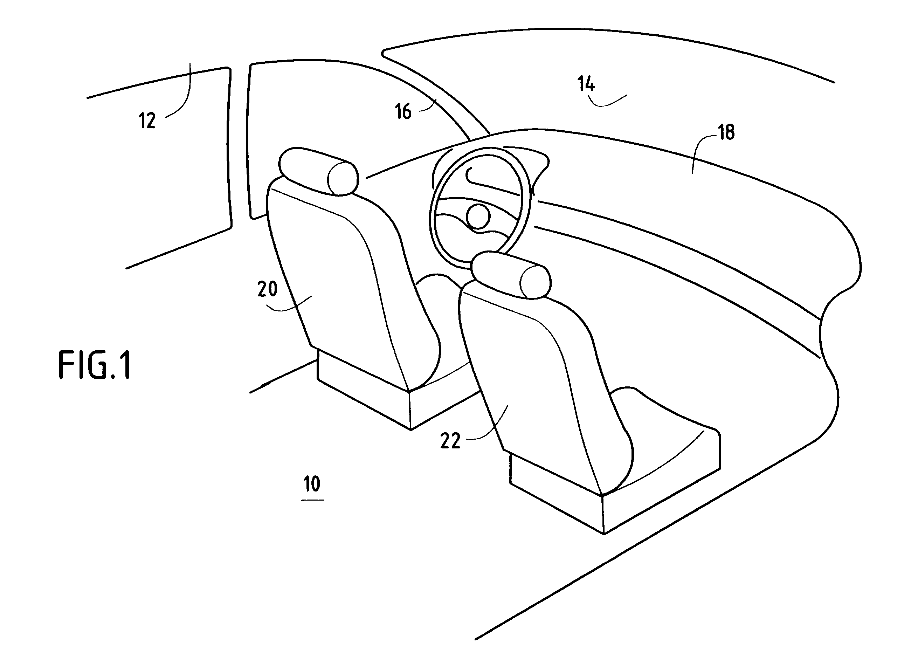

La partie avant de l'habitacle d'un véhicule automobile est illustrée en perpective de façon schématique à la figure 1.

Cet habitacle 10 est formé par différentes parties de carrosserie dont on peut voir un pavillon 12 qui s'étend jusqu'au pare-brise avant 14 et se poursuit de chaque coté de ce pare-brise par des montants 16. Sous ce pare-brise, qui délimite l'habitacle par l'avant, est disposée une planche de bord 18 comportant l'ensemble des instruments nécessaires à la conduite du véhicule (notamment le volant de direction). En arrière de la planche de bord sont disposés côte à côte dans leur position « d'utilisation » un siège conducteur 20 et un siège avant passager 22.

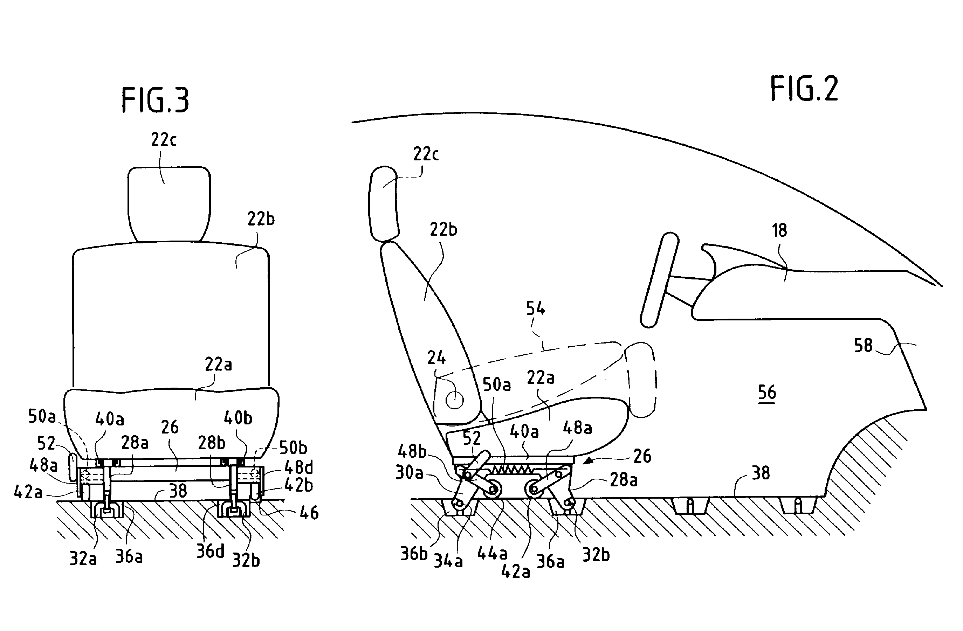

Chaque siège qui comporte classiquement une assise 20a, 22a et un dossier 20b, 22b peut aussi être muni d'un appui-tête à hauteur et inclinaison variables 20c, 22c. Le dossier peut être rabattu ou replié sur l'assise par un pivotement d'environ 90° autour d'un axe d'articulation (illustré par la référence 24 sur la figure 2).

La structure du siège avant passager est montrée plus en détail sur les figures 2 et 3 qui illustrent un premier exemple de réalisation de l'invention.

Dans cet exemple, le siège qui comporte son assise 22a, son dossier 22b articulé autour de l'axe d'articulation 24 et éventuellement son appui-tête inclinable 22c est monté sur un socle (ou châssis 26) muni de pieds avant 28a, 28b et arrière 30a, 30b. Ces pieds sont munis chacun de moyens de verrouillage débrayable manuellement, comme les verrous d'accrochage désarmables décrits dans la demande de brevet française de la demanderesse N°93 00792. Les verrous comportent des crochets qui viennent en prise sur des doigts ou anneaux transversaux 32a, 32b ; 34a, 34b fixés dans des ouvertures 36a, 36b, 36c, 36d du plancher du véhicule 38.

Des glissières de réglage 40a, 40b peuvent avantageusement être prévues entre le socle 26 et l'assise 22a pour permettre un réglage longitudinal de cette assise.

Pour permettre un déplacement du siège de sa position normale d'utilisation à une position de rangement terminale (dossier rabattu), le socle 26 peut être porté sélectivement par des roulettes rétractables avant 42a, 42b et arrière 44a, 44b dont au moins deux roulettes collatérales, c'est à dire disposées sur même axe longitudinal, peuvent rouler le long d'un profil ou « rail » de guidage longitudinal 46. Ces roulettes rétractables qui, dans la position normale d'utilisation du siège, sont rabattues sous l'assise, sont montées aux premières extrémités de leviers 48a, 48b, 48c, 48d dont les secondes extrémités sont solidaires deux à deux de ressorts de rappel 50a, 50b exerçant une force tendant à relever les roulettes en rapprochant les secondes extrémités des leviers. La libération des ressorts est commandée à partir d'un levier de manoeuvre manuel (ou manette 52) qui assure aussi, classiquement au travers d'une tringlerie associée (non représentée), le déverrouillage des verrous d'accrochage 28, 30.

Le mode de mise en oeuvre de ce premier exemple de réalisation d'un siège avant passager selon l'invention est maintenant décrit de façon sommaire en regard des figures 2, 4 et 5 qui représentent respectivement ce siège dans trois positions successives : une position normale d'utilisation, une position intermédiaire de déplacement et une position terminale de « rangement » sous la planche de bord. Sur ces figures, les éléments identiques portent bien entendu les mêmes références.

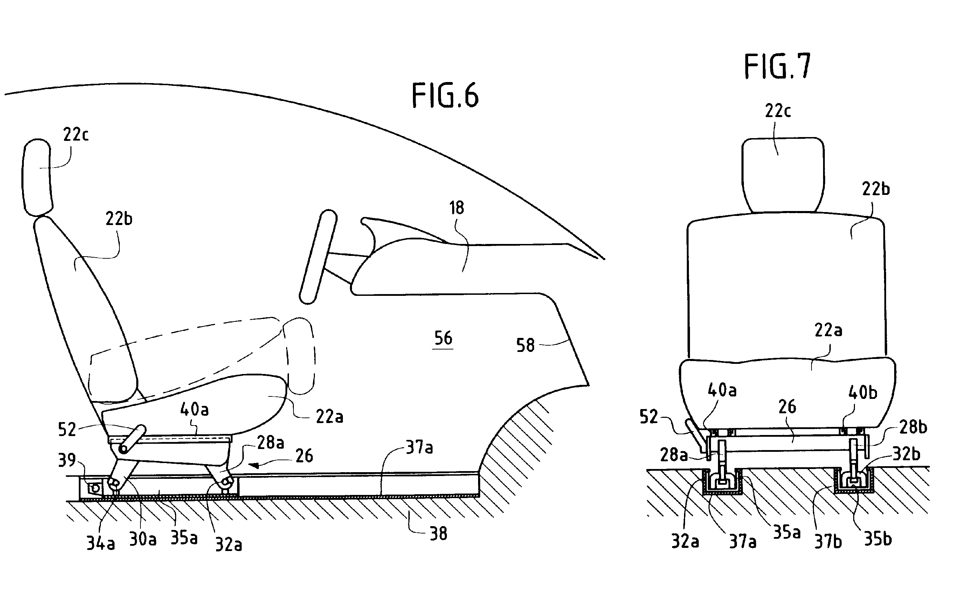

Dans sa position initiale (figure 2), ce siège est en position d'utilisation, dossier droit et assise fixée au plancher du véhicule par les moyens d'accrochage. La représentation en pointillés correspond à une position dite « de tablette » dans laquelle le dossier est rabattu sur l'assise, le dos 54 de ce dossier faisant ainsi par exemple office de table d'écriture pour le conducteur. Dans cette position, il se dégage également un espace au dessus du siège permettant la mise en place d'objets de grande longueur (des skis par exemple). Toutefois, la relative fragilité du dossier du siège passager interdit en pratique le dépôt de pièces de très fort poids (meubles par exemple). Pour la mise en place de ces dernières, il est donc nécessaire de placer le siège avant passager dans une position terminale « de rangement » dans laquelle ce siège est poussé sous la planche de bord dans une cavité 56 réservée à cet effet et s'étendant jusqu'au tablier avant du véhicule 58 afin de libérer en totalité l'espace passager et notamment toute la longueur intérieure de l'habitacle (figure 5). Dans cette position terminale, le siège est également verrouillé au plancher 38 sur des anneaux 60a, 60b et 62a, 62b fixés dans des ouvertures associées 64a, 64b, 64c, 64d pratiquées au niveau du plancher de la cavité 56.

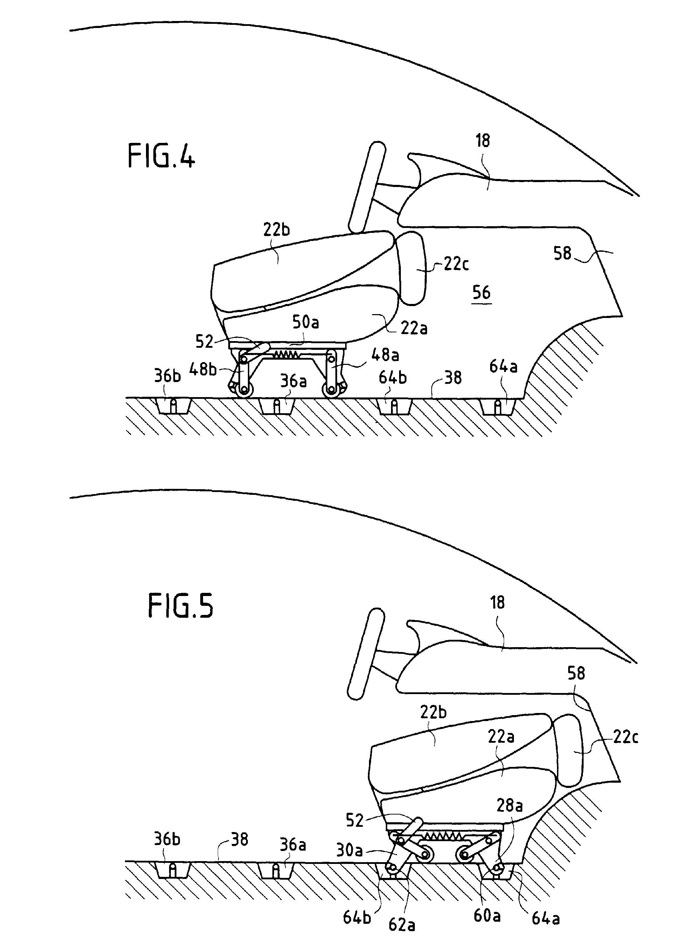

Le passage de la position initiale d'utilisation à la position terminale de rangement s'effectue au travers d'une position intermédiaire dans laquelle le siège avant passager peut se déplacer sur ses roulettes (figure 4). A cet effet, il convient que l'utilisateur, après avoir rabattu le dossier du siège autour de son axe d'articulation, déverrouille les crochets d'accrochage du siège en actionnant la manette 52 puis, le siège étant redressé sur ses roulettes par la force de rappel exercée par les deux ressorts 50a, 50b, pousse le siège vers sa position terminale, ce déplacement se faisant selon une trajectoire rectiligne définie par le rail guide 46 qui s'étend vers l'avant du véhicule jusqu'au niveau de son tablier avant 58. En fin de manipulation, le siège se retrouve alors sous la planche de bord sans aucun portage ni manoeuvre laborieuse.

Notons en outre, que la présence des roulettes sur ce siège permet à celui-ci d'être déplacé très facilement, sans portage, une fois sorti de l'habitacle.

Un second exemple de réalisation du siège avant passager selon l'invention est montrée plus en détail sur les figures 6 et 7.

Dans cet exemple, le siège qui comporte également son assise 22a, son dossier 22b articulé autour de l'axe d'articulation 24 et éventuellement son appui-tête inclinable 22c est monté sur un socle (ou châssis 26) muni de pieds avant 28a, 28b et arrière 30a, 30b. Ces pieds sont comme précédemment chacun munis de verrous désarmables d'accrochage à crochets, tels que ceux décrits dans la demande de brevet française de la demanderesse N°93 00792. Toutefois, les anneaux avant 32a, 32b et arrière 34a, 34b auxquels sont accrochés les crochets des verrous sont ici montés dans deux navettes ou coulisseaux 35a, 35b qui peuvent se déplacer longitudinalement dans deux rails parallèles 37a, 37b fixés au plancher du véhicule 38 et s'étendant jusqu'au tablier avant 58 du véhicule. Des moyens de fixation du coulisseau (donc du siège) dans une position longitudinale prédéterminée, par exemple au moyen d'un ensemble pion/logement 39 actionnable classiquement par un palonnier (non représenté) indépendant de la manette 52 de déverrouillage des pieds avant et arrière, comme l'enseigne la demande de brevet française N°93 03210 de la demanderesse, sont bien entendu aussi prévus.

Des glissières de réglage 40a, 40b peuvent avantageusement être prévues entre le socle 26 et l'assise 22a pour permettre en un réglage longitudinal du siège et une optimisation de l'escamotage sous la planche de bord 18.

Le mode mise en oeuvre de ce siège se révèle plus simple que le précédent puisque pour déplacer le siège de sa position d'origine à sa position de rangement, il suffit après avoir rabattu le dossier sur son assise de déverrouiller la fixation longitudinale du siège (en actionnant le palonnier) et ensuite de pousser le siège jusqu'à sa position terminale, dans la cavité 56 aménagée sous la planche de bord, où le palonnier est relâché permettant l'engagement dans un logement approprié du pion de fixation longitudinal 39.

Bien entendu, si l'invention a été décrite avantageusement en référence à l'habitacle d'un véhicule automobile, il est clair qu'elle est d'application plus générale et l'invention peut intéresser tout autre type de véhicule pour le transport individuel ou collectif notamment ferroviaire (train, métro, tramway, trolleybus), maritime (cabine de bateaux) ou aérien chaque fois qu'une utilisation optimisée des volumes intérieurs est envisagée.

## Revendications

1. Siège passager d'un véhicule qui comporte un habitacle (10) délimité à l'avant par un pare-brise (14) et en dessous par un plancher (38) et comprenant une planche de bord (18) disposée en dessous de ce pare-brise, le siège comportant une assise (22a) et un dossier (22b) qui peut être rabattu sur cette assise, l'assise comportant un socle (26) muni d'une part de pieds avant (28a, 28b) et arrière (30a, 30b) comportant chacun des verrous d'accrochage désarmables pour fixer sélectivement le siège au plancher du véhicule (38) et d'autre part de moyens (36, 60 ; 39) de fixation du siège dans une position longitudinale déterminée, caractérisé par le fait qu'il peut être déplacé entre une position normale d'utilisation dans laquelle un utilisateur peut prendre place sur le siège dont le dossier est alors relevé et une position terminale de rangement dans laquelle le dossier est rabattu sur son assise et le siège est entièrement poussé dans une cavité (56) réalisée sous la planche de bord.

2. Siège passager de véhicule selon la revendication 1, caractérisé en ce que, dans ladite position terminale de rangement, le siège est verrouillé sur des anneaux (60a, 60b, 62a, 62b) fixés dans des ouvertures associées (64a, 64b, 64c, 64d) pratiquées dans le plancher de la cavité (56).

3. Siège passager de véhicule selon la revendication 1, caractérisé en ce que, dans ladite position terminale de rangement, le siège est verrouillé sur des anneaux (32a, 32b, 34a, 34b) montés dans deux coulisseaux (35a, 35b) qui peuvent se déplacer longitudinalement dans deux rails parallèles (37a, 37b) fixés au plancher du véhicule et s'étendant jusqu'au tablier avant du véhicule (58).

4. Siège passager de véhicule selon la revendication 1, caractérisé en ce que ledit socle (26) porte en outre des roulettes rétractables avant (42a, 42b) et arrière (44a, 44b) dont au moins deux roulettes collatérales sont destinées à rouler le long d'un profil de guidage longitudinal (46) fixé au plancher du véhicule.

5. Siège passager de véhicule selon la revendication 4, caractérisé en ce que ledit profil de guidage longitudinal s'étend jusqu'au tablier avant du véhicule (58).

6. Siège passager de véhicule selon la revendication 4, caractérisé en ce que lesdites roulettes rétractables sont montées aux premières extrémités de leviers (48a, 48b, 48c, 48d) dont les secondes extrémités sont solidaires deux à deux de ressorts de rappel (50a, 50b) exerçant une force tendant à relever les roulettes en rapprochant les secondes extrémités des leviers.

7. Siège passager de véhicule selon la revendication 4, caractérisé en ce que la libération des ressorts de rappel est commandée à partir du levier (52) de manoeuvre manuel du déverrouillage des verrous d'accrochage du siège au plancher lors du déverrouillage sélectif de ces verrous.

8. Siège passager de véhicule selon l'une quelconque des revendications 1 à 7, caractérisé en ce qu'il comporte en outre des glissières de réglage (40a, 40b) disposées entre le socle (26) et l'assise (22a) pour permettre un réglage longitudinal du siège.
